# EUROPEAN PATENT SPECIFICATION

(11) **EP 3 903 045 B1**
(45) Date of publication and mention of the grant of the patent: **25.01.2023**
(21) Application number: 19849024.5
(22) Date of filing: 24.12.2019
(51) Int. Cl.: F24F 11/74, F24F 13/10, F24F 7/06, F24F 8/10, F24F 8/70, F24F 13/08, F24F 7/00, F24F 110/68

(54) **DEVICE FOR REDUCING THE RADON CONCENTRATION IN A CONFINED SPACE**
VORRICHTUNG ZUR VERMINDERUNG DER RADON-KONZENTRATION IN EINEM BEGRENZTEN RAUM
DISPOSITIF DE RÉDUCTION DE LA CONCENTRATION EN RADON DANS UN ESPACE CONFINÉ

(30) Priority: 27.12.2018 IT 201800021160
(43) Date of publication of application: 03.11.2021
(73) Proprietor: Radoff S.r.l., 07023 Calangianus (SS) (IT)
(72) Inventor: CASSITTA, Domenico, 07029 TEMPIO PAUSANIA (SS) (IT); CASSITTA, Giovanni Piero, 07029 TEMPIO PAUSANIA (SS) (IT)
(74) Representative: Baldi, Claudio
(86) International application number: PCT/EP2019/087002
(87) International publication number: WO 2020/136189

(56) References cited:
- KR-A- 20160 027 900
- US-A- 4 905 579
- US-A- 4 915 020
- US-A1- 2013 239 803

## Description

The present patent application for industrial invention relates to a device for reducing the radon concentration in a confined space.

As it is known, radon is a radioactive rare gas formed from the decay of radium, which is in turn generated by the decay of uranium. Polonium and bismuth are the extremely toxic products of the radioactive decay of radon.

Being a radioactive gas, when inhaled, radon is carcinogenic for the human being. In particular, radon is one of the first causes of lung cancer.

The main source of radon is the soil. It comes out from the soil and is dispersed in the space, being accumulated in confined spaces and becoming dangerous for the human health. To a lesser extent, other sources of radon are water and building materials, especially those of volcanic origin, like tuff or granite.

The higher is the radon concentration in a confined space, the higher the risk of cancer will be. Moreover, it must be noted that, with a standard temperature and pressure, radon is an odorless colorless gas and therefore its presence can only be detected with special devices.

The radon concentration in a confined space can be measured in a confined space with passive devices, which measure the radon concentration in the space only at the end of a detection period, or with active devices, which provide an instantaneous measurement of the radon concentration in the space.

An immediate method to avoid the accumulation of radon in a confined space is the ventilation of said space. Such a technique is often insufficient, ineffective and expensive in terms of heating or cooling of the space.

Moreover, no devices capable of interacting with the devices used to measure the radon concentration are known, in order to effectively and immediately reduce the radon concentration in the space.

FR3059084 discloses a device for reducing the radon concentration according to the preamble of claim 1.

US4915020 discloses a system for controlling the contaminated air in a living space.

EP3168544 discloses a ventilation device used for ventilating a room.

The purpose of the present invention is to remedy the drawbacks of the prior art by devising a device for reducing the radon concentration in a confined space, which is energy-saving, efficient and practical.

These purposes are achieved according to the invention with the characteristics of the appended independent claim 1.

Advantageous embodiments appear from the dependent claims.

The device of the invention is defined by claim 1.

The advantages of the device according to the invention are evident. Because of the provision of a bi-directional fan, the rotation of the fan can be inverted according to the detection of the radon detector sensor.

For the sake of clarity, the description of the device according to the invention continues with reference to the appended drawings, which have a merely illustrative, not limiting value, wherein:
- Fig.1 is a longitudinal sectional view of the device according to the invention;
- Fig.2 is a block diagram that shows the electrical connections of the device according to the invention.

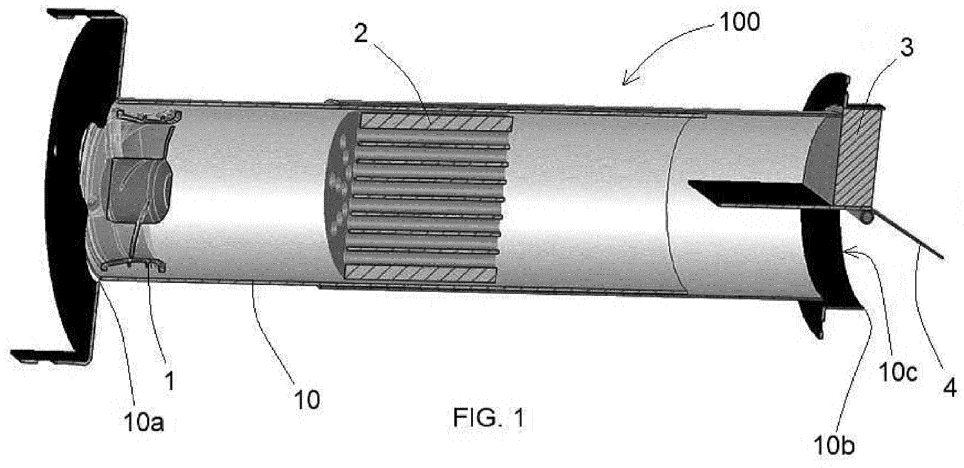

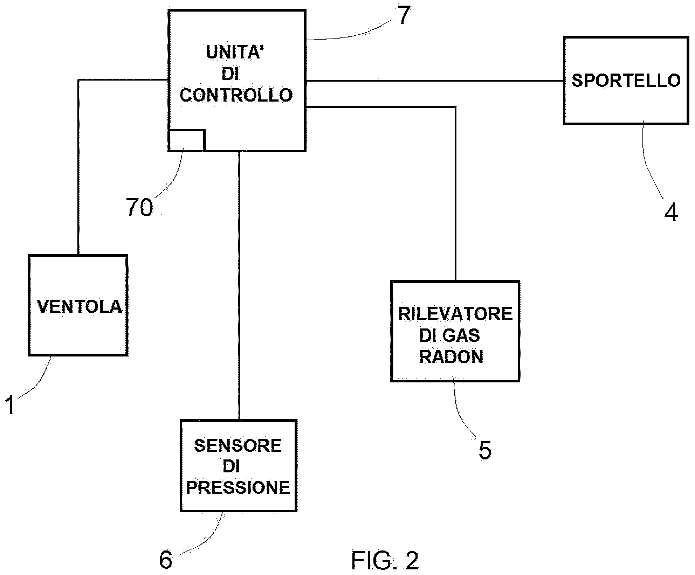

With reference to Figs.1 and 2, the device according to the invention is disclosed, which is generally indicated with reference numeral 100.

The function of the device (100) is to reduce/eliminate the radon concentration in a confined space.

The device (100) comprises a tube (10) with a first end (1 0a) that is suitable for being disposed inside a confined space, and a second end (10b) suitable for being disposed outside said confined space.

The device (100) comprises a fan (1) disposed in the tube (10) and suitable for forcedly conveying the air inside the tube (10). The fan (1) is a bi-directional fan, and can rotate in both rotational directions.

The device (100) comprises a heat exchanger (2) disposed in the tube (10) to heat/cool the air that passes through the tube (10). Advantageously, the heat exchanger (2) is of ceramic type. The function of the heat exchanger (2) is to reduce the temperature variation between the air of the interior space and the air of the exterior space.

The device (100) comprises a radon detector sensor (5) (Fig.2) suitable for detecting the presence of radon in said confined space. The radon detector sensor (5) can be disposed in the tube (10) and/or in the confined space.

With reference to Fig. 2, the device (100) comprises a control unit (7) connected to the radon detector sensor (5).

The control unit (7) is configured in such a way to receive information on the radon concentration in the confined space from the radon detector sensor (5). The control unit (7) comprises a comparator (70) to compare the radon concentration detected by the radon detector sensor (5) with a threshold value stored in the comparator (70).

The control unit (7) is connected to the fan (1) in order to actuate said fan (1) according to the radon concentration detected by the radon detector sensor (5).

The control unit (7) is configured to activate the fan (1) in such a way to extract the air from the confined space and eject the air outside of the confined space when the radon detector sensor (5) detects a radon concentration in the confined space that is higher than the threshold value of the comparator (70).

The control unit (7) is configured to activate the fan (1) in such a way to extract the air from the outside and introduce the air in the confined space when the radon detector sensor (5) detects a radon concentration in the confined space that is lower than or equal to the threshold value of the comparator (70).

With reference to Fig. 1, the device (100) advantageously comprises a lid (4) disposed in the second end (10b) of the pipe (10). The lid (4) is dimensioned in such a way to close only a portion of the second end (10b) of the tube (10).

Advantageously, the device (100) comprises a filter (3) suitable for filtering the air that is introduced in the tube (10) from the outside. The filter (3) is disposed in the second end (10b) of the tube (10) and is suitable for closing a portion of the second end (10b) of the tube (10) not occupied by the lid (4) when the lid (4) is closed. Advantageously, the filter (3) is configured in such a way to filter particles with aerodynamic diameter lower than 2.5 µm.

The lid (4) is connected to the control unit (7) in such a way that the control unit (7) closes the lid (4) when the gas radon detector sensor (5) detects a radon concentration in the confined space that is lower than or equal to the threshold value of the comparator (70), i.e. when the fan (1) rotates in such a way to extract the air from the outside and introduce the air in the confined space. In this way, the air is filtered before being introduced in the confined space.

The control unit (7) is configured to open the lid (4) when the gas radon detector sensor (5) detects a radon concentration in the confined space that is higher than the threshold value of the comparator (70), i.e. when the fan (1) rotates in such a way to extract the air from the inside of the confined space and eject the air outside. In this way, the filter (3) is not consumed by the air that is ejected from the confined space.

Advantageously, the device (100) comprises a pressure sensor (6) connected to the control unit (7) in such a way to send information on a pressure value of the air in the confined space to the control unit (7).

The control unit (7) is configured to adjust the speed of the fan (1) in such a way to increase the pressure inside the confined space.

The control unit (7) uses the information from the radon detector sensor (5) to determine the rotational direction of the fan (1) and uses the information from the pressure sensor (6) to determine the rotational speed of the fan (1).

Optionally, the device (100) comprises other sensors, such as for example a humidity sensor, a methane gas detector sensor and/or a temperature sensor (not shown in the figures).

When the radon detector sensor (5) detects a radon concentration that is higher than the threshold value stored in the comparator (70) of the control unit (7), said control unit (7) actuates the fan (1) in a first rotational direction, in such a way that the fan (1) extracts the air from the confined space and then ejects the air outside.

The control unit (7) opens the lid (4) in such a way that the air is ejected from the interior space passing through an opening (10c) of the second end (10b) of the tube (10).

The air that is ejected from the confined space passes through the tube (10), intercepts the heat exchanger (2) and exchanges heat with the heat exchanger (2).

When the radon detector sensor (5) detects a radon concentration that is lower than or equal to the threshold value set in the comparator (70) of the control unit (7), the control unit (7) inverts the rotational direction of the fan (1) and actuates the fan (1) in a second rotational direction, in such a way that the air from the outside is introduced in the confined space.

The control unit (7) closes the lid (4) in such a way that the opening (10c) of the second end (10b) of the tube (10) is closed. Therefore the air is forced to enter the tube (10) through the filter (3).

In view of the above, only the air that is introduced in the confined space is filtered.

During the introduction of the air from the outside, the speed of the fan (1) is adjusted in such a way to force the air and increase the internal pressure. In fact, a high pressure value hinders the formation of radon.

The air that is introduced in the confined space passes through the tube (10), intercepts the heat exchanger (2) and exchanges heat with the heat exchanger (2), in such a way that the air that is introduced in the confined space does not cause any sudden change in temperature in the confined space.

## Claims

1. Device (100) for reducing the radon concentration in a confined space, comprising:
- a tube (10) with a first end (10a) that is suitable for being disposed inside a confined space, and a second end (10b) suitable for being disposed outside said confined space;
- a fan (1) disposed in the tube (10) and suitable for forcedly conveying the air inside the tube (10);
- a heat exchanger (2) disposed in the tube (10) to heat/cool the air that passes through the tube (10);
- a radon detector sensor (5) suitable for detecting the presence of radon in said confined space;
- a control unit (7) connected to said radon detector sensor (5); said control unit (7) being configured in such a way to receive information on the radon concentration in said confined space from the radon detector sensor (5); said control unit (7) comprising a comparator (70) to compare the radon concentration detected by the radon detector sensor (5) with a threshold value stored in the comparator (70); said control unit (7) being connected to said fan (1) to activate said fan (1) according to the radon concentration detected by the radon detector sensor (5);
said device (100) being **characterized in that**:
said fan (1) is a bi-directional fan;
said control unit (7) is configured to activate the fan (1) in a first rotational direction in such a way to extract the air from the inside of said confined space and eject said air outside when the radon detector sensor (5) detects a radon concentration in the confined space that is higher than the threshold value of the comparator (70);
- said control unit (7) is configured to invert the rotational direction of the fan (1) and activate the fan (1) in a second rotational direction in such a way that the fan (1) extracts the air from outside and introduces said air in the confined space when the radon detector sensor (5) detects a radon concentration in the confined space that is lower than or equal to the threshold value of the comparator (70);
said device (100) also comprising:
- a lid (4) disposed in the second end (10b) of the tube (10); said lid (4) having suitable dimensions to close only a portion of the second end (10b) of the tube (10);
- a filter (3) suitable for filtering the air that is introduced in the tube (10) from the outside; said filter (3) being disposed in the second end (10b) of the tube (10) and being suitable for closing a portion of the second end (10b) of the tube (10) not occupied by the lid (4) when said lid (4) is closed;
said lid (4) being connected to said control unit (7) in such a way that said control unit (7) closes the lid (4) when the gas radon detector sensor (5) detects a radon concentration in the confined space that is lower than or equal to the threshold value of the comparator (70) and opens the lid (4) when the gas radon detector sensor (5) detects a radon concentration in the confined space that is higher than the threshold value of the comparator (70).

2. The device (100) of claim 1, wherein the heat exchanger (2) is of ceramic type.

3. The device (100) of claim 1 or 2, comprising a pressure sensor (6) connected to the control unit (7) in such a way to send information on a pressure value of the air in the confined space to the control unit (7); said control unit (7) being configured to adjust the speed of the fan (1) in such a way to increase the pressure inside the confined space.

4. The device (100) of any one of the preceding claims, comprising a humidity sensor, a methane gas detector sensor and/or a temperature sensor.

## Patentansprüche

1. Vorrichtung (100) zur Verringerung der Radonkonzentration in einem geschlossenen Raum, umfassend:
- eine Röhre (10) mit einem ersten Ende (10a), das geeignet ist, innerhalb eines geschlossenen Raumes angeordnet zu werden, und einem zweiten Ende (10b), das geeignet ist, außerhalb des geschlossenen Raumes angeordnet zu werden;
- einen Lüfter (1), der in der Röhre (10) angeordnet ist und geeignet ist, die Luft zwangsweise ins Innere der Röhre (10) zu leiten;
- einen Wärmetauscher (2), der in der Röhre (10) angeordnet ist, um die durch die Röhre (10) strömende Luft zu erwärmen/kühlen;
- einen Radonerfassungssensor (5), der geeignet ist, das Vorhandensein von Radon in dem geschlossenen Raum zu erfassen;
- eine Steuereinheit (7), die mit dem Radonerfassungssensor (5) verbunden ist; wobei die Steuereinheit (7) so konfiguriert ist, dass sie Informationen über die Radonkonzentration in dem geschlossenen Raum von dem Radonerfassungssensor (5) empfängt; wobei die Steuereinheit (7) eine Vergleichseinrichtung (70) umfasst, um die vom Radonerfassungssensor (5) erfasste Radonkonzentration mit einem Schwellenwert zu vergleichen, der in der Vergleichseinrichtung (70) gespeichert ist; wobei die Steuereinheit (7) mit dem Lüfter (1) verbunden ist, um den Lüfter (1) entsprechend der von dem Radonerfassungssensor (5) erfassten Radonkonzentration zu aktivieren;
wobei die Vorrichtung (100) **dadurch gekennzeichnet ist, dass**:
der Lüfter (1) ein bidirektionaler Lüfter ist;
die Steuereinheit (7) konfiguriert ist, um den Lüfter (1) in einer ersten Drehrichtung so zu aktivieren, dass die Luft aus dem Inneren des geschlossenen Raumes abgesaugt und nach Außen ausgestoßen wird, wenn der Radonerfassungssensor (5) eine Radonkonzentration in dem geschlossenen Raum erfasst, die höher als der Schwellenwert der Vergleichseinrichtung (70) ist;
die Steuereinheit (7) konfiguriert ist, um die Drehrichtung des Lüfters (1) umzukehren und den Lüfter (1) in einer zweiten Drehrichtung so zu aktivieren, dass der Lüfter (1) die Luft von außerhalb ansaugt und die Luft in den geschlossenen Raum einleitet, wenn der Radonerfassungssensor (5) eine Radonkonzentration in dem geschlossenen Raum erfasst, die kleiner oder gleich dem Schwellenwert der Vergleichseinrichtung (70) ist;
wobei die Vorrichtung (100) ferner Folgendes umfasst:
- einen Deckel (4), der an dem zweiten Ende (10b) der Röhre (10) angeordnet ist; wobei der Deckel (4) geeignete Abmessungen aufweist, um nur einen Abschnitt des zweiten Endes (10b) der Röhre (10) zu schließen;
- einen Filter (3) der geeignet ist, die Luft, die von außerhalb des geschlossenen Raumes in die Röhre (10) eingeleitet wird, zu filtern; wobei der Filter (3) an dem zweiten Ende (10b) der Röhre (10) angeordnet ist und geeignet ist, einen Abschnitt des zweiten Endes (10b) der Röhre (10) zu schließen, der nicht von dem Deckel (4) besetzt ist, wenn der Deckel (4) geschlossen ist;
wobei der Deckel (4) so mit der Steuereinheit (7) verbunden ist, dass die Steuereinheit (7) den Deckel (4) schließt, wenn der Radongaserfassungssensor (5) eine Radonkonzentration in dem geschlossenen Raum erfasst, die kleiner oder gleich dem Schwellenwert der Vergleichseinrichtung (70) ist, und den Deckel (4) öffnet, wenn der Radongaserfassungssensor (5) eine Radonkonzentration in dem geschlossenen Raum erfasst, die größer oder gleich dem Schwellenwert der Vergleichseinrichtung (70) ist.

2. Vorrichtung (100) nach Anspruch 1, wobei der Wärmetauscher (2) vom Keramiktyp ist.

3. Vorrichtung (100) nach Anspruch 1 oder 2, umfassend einen Drucksensor (6), der mit der Steuereinheit (7) so verbunden ist, dass er Informationen über einen Druckwert der Luft in dem geschlossenen Raum an die Steuereinheit (7) sendet; wobei die Steuereinheit (7) konfiguriert ist, um die Geschwindigkeit des Lüfters (1) so zu regeln, dass der Druck im Innern des geschlossenen Raumes erhöht wird.

4. Vorrichtung (100) nach einem der vorstehenden Ansprüche, umfassend einen Feuchtigkeitssensor, einen Methangaserfassungssensor und/oder einen Temperatursensor.

## Revendications

1. Dispositif (100) pour réduire la concentration de radon dans un environnement fermé, comprenant :
- une conduite (10) ayant une première extrémité (10a), destinée à être disposée à l'intérieur d'un environnement fermé, et une seconde extrémité (1 0b), destinée à être disposée à l'extérieur du dit environnement fermé ;
- un ventilateur (1) disposé dans la conduite (10) et apte à convoyer de manière forcée l'air dans la conduite (10) ;
- un échangeur de chaleur (2) disposé dans la conduite (10) pour réchauffer/refroidir l'air qui traverse la conduite (10) ;
- un capteur de détection du radon (5) apte à relever la présence de radon à l'intérieur du dit environnement fermé ;
- une unité de commande électronique (7) branchée au dit capteur de détection de radon (5) ; ladite unité de commande électronique (7) étant configurée de manière à recevoir du capteur de détection de radon (5) une information sur la concentration de radon dans ledit environnement fermé ; ladite unité de commande électronique (7) comprenant un comparateur (70) pour comparer la concentration de radon relevée par le capteur de détection de radon (5) avec une valeur de seuil enregistrée dans le comparateur (70) ; ladite unité de commande électronique (7) étant branchée au susdit ventilateur (1) pour actionner ledit ventilateur (1) sur la base de la concentration de radon relevée par le capteur de détection de radon (5) ;
ledit dispositif (100) étant **caractérisé en ce que** :
ledit ventilateur (1) est du type bidirectionnel ;
ladite unité de commande électronique (7) est configurée pour actionner le ventilateur (1) dans une première direction de rotation de manière à aspirer l'air depuis l'intérieur du dit environnement fermé et à l'expulser hors de l'environnement fermé quand le capteur de détection de radon (5) relève une concentration de radon dans l'environnement fermé supérieure à la valeur de seuil du comparateur (70) ;
ladite unité de commande électronique (7) est configurée pour inverser la direction de rotation du ventilateur (1) et actionner le ventilateur (1) dans une seconde direction de rotation de manière à ce que le ventilateur (1) aspire l'air depuis l'externe et introduise cet air dans l'environnement fermé lorsque le capteur de détection de radon (5) relève une concentration de radon dans l'environnement fermé inférieure ou égale à la valeur de seuil du comparateur (70) ;
ledit dispositif (100) comprenant également :
- un volet (4) disposé en correspondance de la seconde extrémité (10b) de la conduite (10) ; ledit volet (4) ayant des dimensions aptes à fermer seulement une portion de la seconde extrémité (10b) de la conduite (10) ;
- un filtre (3) apte à filtrer l'air en entrée dans la conduite (10) depuis l'extérieur ; ledit filtre (3) étant disposé en correspondance de la seconde extrémité (10b) de la conduite (10) et apte à fermer une portion de la seconde extrémité (10b) de la conduite (10) non occupée par le volet (4), lorsque ledit volet (4) est fermé ;
ledit volet (4) étant branché à ladite unité de commande électronique (7) de manière à ce que ladite unité de commande électronique (7) ferme le volet (4) lorsque le capteur de détection de radon (5) relève une concentration de radon dans l'environnement fermé inférieure ou égale à la valeur de seuil du comparateur (70) et ouvre le volet (4) lorsque le capteur de détection de radon (5) relève une concentration de radon dans l'environnement fermé supérieure à la valeur de seuil du comparateur (70).

2. Dispositif (100) selon la revendication 1, où l'échangeur de chaleur (2) est du type en céramique.

3. Dispositif (100) selon la revendication 1 ou 2, comprenant un capteur de pression (6) branché à l'unité de commande électronique (7) de manière à envoyer à l'unité de commande électronique (7) une information sur une valeur de pression de l'air dans l'environnement fermé ; ladite unité de commande électronique (7) étant configurée de manière à régler la vitesse du ventilateur (1) afin d'augmenter la pression à l'intérieur de l'environnement fermé.

4. Dispositif (100) selon l'une quelconque des revendications précédentes, comprenant un capteur d'humidité, un capteur pour la détection de gaz méthane et/ou un capteur de température.
